# EUROPÄISCHE PATENTSCHRIFT

(11) **EP 1 729 037 B1**
(45) Veröffentlichungstag und Bekanntmachung des Hinweises auf die Patenterteilung: **10.03.2010**
(21) Anmeldenummer: 05104605.0
(22) Anmeldetag: 30.05.2005
(51) Int. Cl.: F16H 61/12, F16H 15/42

(54) **Kegelringgetriebe**
Friction ring transmission
Transmission d'anneau de friction

(43) Veröffentlichungstag der Anmeldung: 06.12.2006
(73) Patentinhaber: Getrag Ford Transmissions GmbH, 50725 Köln (DE)
(72) Erfinder: Leibbrandt, Martin, Dr., 50181 Bedburg (DE)

(56) Entgegenhaltungen:
- DE-A1- 19 542 726
- DRAEGER C ET AL: "DAS KEGELRINGGETRIEBE - EIN STUFENLOSES REIBRADGETRIEBE AUF DEM PRUEFSTAND" September 1998 (1998-09), ATZ AUTOMOBILTECHNISCHE ZEITSCHRIFT, FRANCKH., STUTTGART, DE, PAGE(S) 640-642,644 , XP000780495 ISSN: 0001-2785 * Abbildungen *

## Beschreibung

Die Erfindung betrifft ein Kegelringgetriebe mit zwei entgegengesetzt zueinander auf parallelen Wellen angeordneten Kegelreibrädern und mit einem Reibring, der mit beiden Kegelreibrädern in Eingriff steht und eines der Kegelreibräder umgreift.

Bei einem Kegelring- oder Kegelreibringgetriebe handelt es sich um ein stufenloses Getriebe, bei dem das Übersetzungsverhältnis durch die Verstellung des Reibrings in axialer Richtung der Wellen stufenlos variiert werden kann. Eine Möglichkeit, den Reibring in axialer Richtung zu verschieben, besteht darin, ihn über zum Beispiel einen Spindeltrieb zwangszuführen. Dies hat jedoch verschiedene Nachteile. Ein gewichtiger Nachteil besteht darin, dass eine derartige Zwangsführung des Ringes durch eine schlechte Dynamik gekennzeichnet ist.

Eine zweite Möglichkeit, den Reibring in axialer Richtung zu verstellen, wird in der DE 195 42 726 beschrieben. Durch Vorgabe eines Kippwinkels bezogen auf eine sich senkrecht zu den Drehachsen der Kegelreibräder erstreckenden Laufebene lässt sich der Reibring ebenfalls axial verschieben. Durch den Kippwinkel stellen sich am Reibring in Abhängigkeit der Drehrichtung der beiden Kegelreibräder Schlupfkräfte ein, die den Reibring in die eine oder andere Richtung entlang der Achsen der Kegelreibräder beschleunigen. Diese Methode der Verstellung zeichnet sich durch eine hohe Dynamik und einen guten Wirkungsgrad aus. Allerdings muss der Kippwinkel des Reibringes stets geregelt werden.

In der DE 195 42 726 wird zum Regeln des Kippwinkels ein schwenkbarer Rahmen vorgestellt, dessen Schwenkwinkel durch eine Verstellvorrichtung bzw. durch einen Verstellmechanismus geregelt werden kann. Der Rahmen weist dabei zwei zueinander beabstandete und parallel zu den Drehachsen der Kegelreibräder verlaufende Schienen auf, die einen Schlitten führen, der entlang der Schienen axial verschoben werden kann. Dieser verschiebbare Schlitten führt den Reibring, wobei beim Verschwenken des Rahmens über den Schlitten der Reibring aus einer zu den Achsen der Kegelreibräder senkrechten Laufebene gekippt wird.

Bei Ausfall des Verstellmechanismus können je nach Konstruktionsweise unterschiedliche Situationen auftreten, die eine weitere Nutzung des Getriebes zumindest im Notbetrieb ausschließen. Verharrt der Verstellmechanismus in der Stellung, die er beim Ausfall innehatte, läuft der Reibring in eine axiale Endlage, soweit die Stellung beim Ausfall einen Kippwinkel vorgegeben hat. Dies führt dazu, dass das sich dann einstellende Übersetzungsverhältnis aufgrund der axialen Endlage des Reibringes dem minimalen oder maximalen Übersetzungsverhältnis des Kegelringgetriebes entspricht. Wird ein derartiges Kegelringgetriebe in einem Kraftfahrzeug eingesetzt, ließe sich dieses bei Ausfall des Verstellmechanismus praktisch nicht mehr nutzen. Entweder könnte das Kraftfahrzeug nur noch mit sehr kleiner Geschwindigkeit gefahren werden oder, bei anderer axialer Endlage des Reibrings, nicht mehr aus dem Stand angefahren werden.

Ist der Verstellmechanismus nach dem Ausfall nicht selbsthemmend, so geht der Reibring in Abhängigkeit vom übertragenen Drehmoment in unregelmäßige Bewegungsmuster über. Nimmt der Verstellmechanismus nach Ausfall eine Neutralstellung ein, so fährt der Reibring in eine antriebsmomentenabhängige Position.

Der Erfindung liegt daher die Aufgabe zugrunde, ein Kegelringgetriebe bereitzustellen, das bei Ausfall des Verstellmechanismus einen kontrollierbaren und in einem Kraftfahrzeug einen sinnvollen Notbetrieb ermöglicht, soweit es dort eingebaut ist.

Die der Erfindung zugrunde liegende Aufgabe wird mit einem Kegelringgetriebe gemäß Anspruch 1 gelöst. Bevorzugte Ausführungsformen können den Unteransprüchen entnommen werden.

Das Kegelringgetriebe gemäß Anspruch 1 zeichnet sich dadurch aus, dass eine einen Aktuator umfassende Verstellvorrichtung bei einer Neutralstellung des Akfuators eine axiale Neutralposition des Reibrings festlegt, wobei bei axialen Positionen des Reibrings, die von der Neutralposition abweichen, die Verstellvorrichtung bei Neutralstellung des Aktuators Kippwinkel vordurch die der Reibring in Richtung der Neutralposition bewegt wird. Dies eröffnet die Möglichkeit, in der Verstellvorrichtung einen Aktuator zu verwenden, der im Falle eines Fehlers oder Ausfalls die Neutralstellung einnimmt, wobei durch die Verstellvorrichtung der Reibring unabhängig von seiner augenblicklichen Lage in die Neutralposition gelenkt oder eingeregelt wird.

Die Neutralposition kann dabei so gewählt werden, dass in dieser Position des Reibrings das Kegelringgetriebe ein mittleres Übersetzungsverhältnis aufweist, was dem Übersetzungsverhältnis eines gewöhnlichen Kfz-Schaltgetriebes im 3. Gang entsprechen könnte. Somit ließe sich ein mit dem Kegelringgetriebe ausgestattete Kraftfahrzeug noch anfahren und auch mit genügend hoher Geschwindigkeit bewegen, auch wenn die Verstellvorrichtung beispielsweise durch Ausfall der Versorgungsspannung oder bei Kabelbruch nicht mehr funktionsfähig ist.

Befinden sich der Aktuator in Neutralstellung und der Reibring in Neutralposition, ergibt sich durch die Verstellvorrichtung für den Reibring ein Kippwinkel gleich Null. Dies bedeutet, dass in dieser Neutralposition zumindest näherungsweise keine Stellkräfte auf den Reibring wirken. Sobald der Reibring durch äußere Einflüsse von der Neutralposition abweicht, stellen sich durch die Verstellvorrichtung bzw. durch deren Geometrie Kippwinkel ein, die den Reibring wieder zurück in die Neutralposition bringen.

In einer bevorzugten Ausführungsform legt die Verstellvorrichtung für jede Stellung des Aktuators jeweils eine vorbestimmte Position des Reibringes in axialer Richtung fest, wobei bei Positionen, die von der vorbestimmten Position abweichen, die Verstellvorrichtung Kippwinkel vorgibt, durch die der Reibring in Richtung der vorbestimmten Position bewegt wird. Somit kann jeder Stellung des Aktuators genau eine Position des Reibringes zugeordnet werden, wobei durch die Verstellvorrichtung über die Vorgabe der Kippwinkel jeweils eine stabile Lage des Reibringes erzielt wird.

Der Aktuator kann einen federzentrierten Linear-Proportionalmagneten umfassen. Fällt die Stromzufuhr des Aktuators aus, so sorgt eine Feder für die Neutralstellung des Aktuators. Ein derart ausgebildeter Aktuator kann die zum Kippen des Reibringes notwenigen Kräfte ohne weiteres aufbringen, da diese sehr klein sind.

In einem bevorzugten Ausführungsbeispiel weist der Aktuator einen Fußpunkt auf, dessen Lage sich in Abhängigkeit der axialen Position des Reibrings ändert. Die Änderung der Lage des Punktes kann dabei zur Änderung der axialen Position des Reibringes proportional, progressiv oder degressiv sein.

Vorzugsweise ist der Fußpunkt des Aktuators mit einer Fußpunktführung verbunden. Die Fußpunktführung kann als Schiene ausgebildet sein, die den Fußpunkt des Aktuators verschiebbar lagert. Die Schiene gibt somit alle möglichen Lagen des Fußpunktes des Aktuators vor.

In einem bevorzugten Ausführungsbeispiel ist die Führungsschiene zu den parallelen Drehachsen der Kegelreibräder geneigt und weist vorzugsweise einen geraden Verlauf auf. Die Führungsschiene steht dabei zweckmäßigerweise fest.

Die Neigung der Führungsschiene bestimmt dabei den Verlauf des Kippwinkels in Abhängigkeit der Axialposition des Reibrings für eine konstante Stellung des Aktuators. Je größer die Neigung der Führungsschiene ist, desto stärker steigt der Kippwinkel von der Position des Reibrings aus gesehen an, in der der Kippwinkel, bedingt durch die Verstellvorrichtung, einen Wert gleich Null aufweist.

In einem bevorzugten Ausführungsbeispiel ist die Neigung der Führungsschiene einstellbar. Somit lässt sich der Neigungswinkel gegenüber den Achsen der Kegelreibräder variieren. Insbesondere ist es möglich, die Schiene von einem positiven Neigungswinkel zu einem negativen Neigungswinkel zu verschwenken. Durch das Einstellen eines negativen Neigungswinkels lässt sich das erfindungsgemäße automatische Einregeln einer Position in Abhängigkeit einer bestimmten Stellung des Aktuators auch dann erreichen, wenn die Kegelreibräder in einer zu ihrer gewöhnlichen Drehrichtung entgegengesetzten Drehrichtung rotieren. Bei einem Kegelringgetriebe in einem Kraftfahrzeug ist dies der Fall, wenn das Kraftfahrzeug rückwärts bewegt werden soll.

Die Verstellvorrichtung kann neben dem wenigstens einen Aktuator noch einen weiteren Aktuator umfassen. Die Aktuatoren können in der Verstellvorrichtung derart zusammenwirken, dass eine Bewegung des Aktuators zu einer reziproken Bewegung des anderen Aktuators führt. Dies eröffnet die Möglichkeit der Verwendung von Aktuatoren mit Zugmagneten, deren Ansteuerung und Handhabung wesentlich einfacher ist als die Handhabung von sogenannten Push/Pull-Magneten.

Alternativ zum Ausführungsbeispiel, bei dem die Fußpunktführung als Schiene ausgebildet ist, kann die Fußpunktführung auch als Schwenkarm ausgebildet sein. Der Schwenkarm ist dabei um eine Schwenkachse drehbar gelagert, wobei durch die Drehung des Schwenkarmes sich die Lage des Fußpunktes des Aktuators ändert. Die Schwenkachse kann dabei senkrecht zu den parallelen Achsen der Kegelreibräder verlaufen und diese beiden Achsen schneiden.

Die Schwenkachse des Schwenkarms kann mit dem Reibring in axialer Richtung der Kegelreibräder bewegbar sein. Somit steht die Schwenkachse des Schwenkarms nicht fest, sondern ist lediglich bezogen auf die axiale Position des Reibrings festgelegt.

Das Merkmal, dass Schwenkachse des Schwenkarms und Reibring lediglich relativ zueinander fixiert sind, lässt sich bevorzugt durch einen Schlitten realisieren, wobei eine Ringführung beispielsweise in Form eines Rahmens für den Reibring und der Schwenkarm auf dem Schlitten angeordnet sind. Der Schlitten lässt sich parallel zu den Achsen der Kegelräder verfahren. Der Rahmen gibt dabei den Kippwinkel für den Reibring vor, so dass auch der Rahmen wie der Schwenkarm drehbar auf dem Schlitten angeordnet ist. Der Abstand zwischen Kippachse des Rahmens und Schwenkachse des Schwenkarms ist dabei konstant.

Es kann eine Getriebeeinheit vorgesehen sein, die eine axiale Bewegung des Reibrings in eine Schwenkbewegung des Schwenkarms überführt. Somit verändert sich die Lage des Fußpunkts des Aktuators in Abhängigkeit der axialen Position des Reibrings.

Die Getriebeeinheit kann dabei wenigstens einen Seilzug umfassen, der mit dem Schwenkarm einerseits und mit einem ortsfesten Punkt andererseits verbunden ist. Der Seilzug ist dabei derart an dem Schwenkarm befestigt, dass durch eine translatorische Bewegung der Schwenkachse des Schwenkarms sich in einem bestimmten Verhältnis der Schwenkarm um die Schwenkachse dreht. Auch können ggf. zwei gegeneinander arbeitende Seilzüge vorgesehen sein, um den Fußpunkt des Aktuators vollständig zu fixieren.

Anstelle des Schwenkarms kann die Fußpunktführung lediglich ein Abstützlager umfassen, das auf dem Schlitten angeordnet ist. Die relative Lage dieses Abstützlagers bezogen auf den Rahmen hängt wiederum von der axialen Position des Reibringes ab. Die dabei vorzusehende Getriebeeinheit zur Verstellung des Abstützlagers muss dabei eine translatorische Bewegung des Reibrings in eine andere translatorische Bewegung des Abstützlagers übersetzen.

Die Kippachse, um die der Reibring gekippt werden kann, kann in der Ebene der parallelen Achsen der Kegelräder und vorzugsweise in der Laufebene des Reibrings liegen.

Anhand der in den Figuren dargestellten Ausführungsbeispiele wird die Erfindung näher erläutert. Es zeigen:
- Figur 1: ein Kegelringgetriebe mit einer Führungsschiene;
- Figur 2: zwei unterschiedliche Positionen eines Reibrings des Kegelringgetriebes der Figur 1 ; und
- Figur 3: ein weiteres Kegelringgetriebe mit einem Schwenkarm.

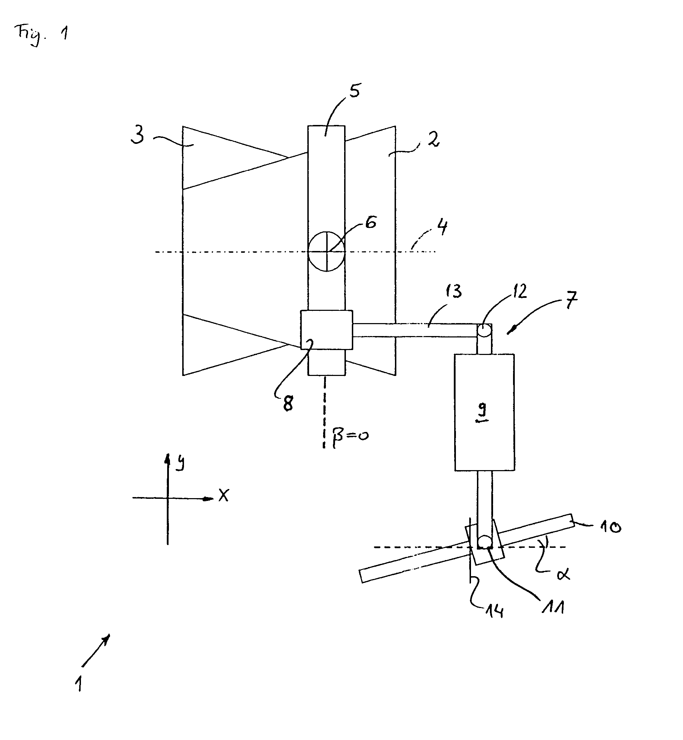

Figur 1 zeigt ein Kegelringgetriebe, das in seiner Gesamtheit mit 1 bezeichnet wird. Das Kegelringgetriebe 1 weist ein erstes Kegelreibrad 2 und ein zweites Kegelreibrad 3 auf. Die Kegelreibräder 2, 3 sind zueinander entgegengesetzt angeordnet, wobei deren Drehachsen zueinander parallel verlaufen und einen gewissen Abstand zueinander aufweisen. In der Figur 1 sind die Drehachsen der Kegelreibräder 2, 3 durch eine gestrichelte Linie 4 dargestellt, wobei in der Darstellung der Figur 1 die Drehachse des Kegelreibrads 3 hinter der Drehachse des Kegelreibrads 2 liegt.

Um ein Drehmoment von dem ersten Kegelreibrad 2 auf das zweite Kegelreibrad 3 zu übertragen, ist ein Reibring 5 vorgesehen, der mit beiden Kegelreibrädern 2, 3 in Eingriff steht und das erste Kegelreibrad 2 umgreift. Der Reibring 5 kann um eine Kippachse 6 gekippt werden, die sich in der Figur 1 in die Zeichenebene erstreckt. Wie zu erkennen ist, schneidet die Kippachse 6 die gestrichelte Linie 4 und somit die beiden Drehachsen der Kegelreibräder 2, 3.

Um den Reibring 5 um die Kippachse 6 zu kippen, ist eine mit 7 bezeichnete Verstellvorrichtung vorgesehen. Die Verstellvorrichtung 7 umfasst eine Ringführung 8, einen Aktuator 9 und eine Führungsschiene 10. Die Führungsschiene 10 ist zur gestrichelten Linie 4 und somit zu den parallelen Drehachsen der Kegelreibräder 2, 3 um einen Winkel geneigt. Ein Fußpunkt 11 des Aktuators 9 lässt sich entlang der Schiene 10 verschieben, wobei sich die Lage des Fußpunktes 11 in Y-Richtung bezogen auf die Achsen der Kegelreibräder 2, 3 ändert.

In der Darstellung der Figur 1 weist der Reibring 5 einen Kippwinkel gleich Null auf. Bei diesem Kippwinkel gleich Null läuft der Reibring 5 in einer zu den beiden Drehachsen der Kegelreibräder 2, 3 senkrechten Laufebene, wobei eine Bewegung des Reibrings 5 in Richtung der parallelen Drehachsen der Kegelreibräder 2, 3, d.h. in X-Richtung, nicht stattfindet.

An einem dem Fußpunkt 11 abgewandten Ende, an einem reibringseitigen Ende 12 ist der Aktuator 9 über einen Anlenkhebel 13 mit der Ringführung 8 verbunden.

Die senkrechte, durchgezogene Linie 14 an der Führungsschiene 10 kennzeichnet die Lage des Fußpunktes 11, wenn sich der Aktuator in einer Neutralstellung befindet. Dieser Neutralstellung des Aktuators 9 auf der Linie 14 ist eine entsprechende Neutralposition des Reibrings 5 zugeordnet, die zu der in Figur 1 dargestellten Position des Reibringes 5 einen Abstand aufweist. Dieser Abstand entspricht dem in Figur 1 dargestellten Abstand zwischen der Linie 14 und dem Fußpunkt 11. Aus der Geometrie der Verstellvorrichtung 7 wird deutlich, dass bei Neutralstellung des Aktuators 9 und bei Neutralposition des Reibringes 5 mit einem Kippwinkel gleich Null der Abstand zwischen Fußpunkt 11 und dem reibringseitigen Punkt 12 größer ist als der in Figur 1 dargestellte Abstand zwischen Fußpunkt 11 und Punkt 12. Mit anderen Worten: der Aktuator 9 gleicht den Versatz des Fußpunktes 11 zur Neutralstellung aktiv aus, so dass der Reibring 5 nicht verkippt ist. Somit stellt Figur 1 einen beliebigen Betriebspunkt des Kegelringgetriebes 1 dar, wobei durch die axiale Lage des Reibringes 5 sich ein bestimmtes Übersetzungsverhältnis bedingt durch die wirksamen Radien der Kegelreibräder 2, 3 einstellt.

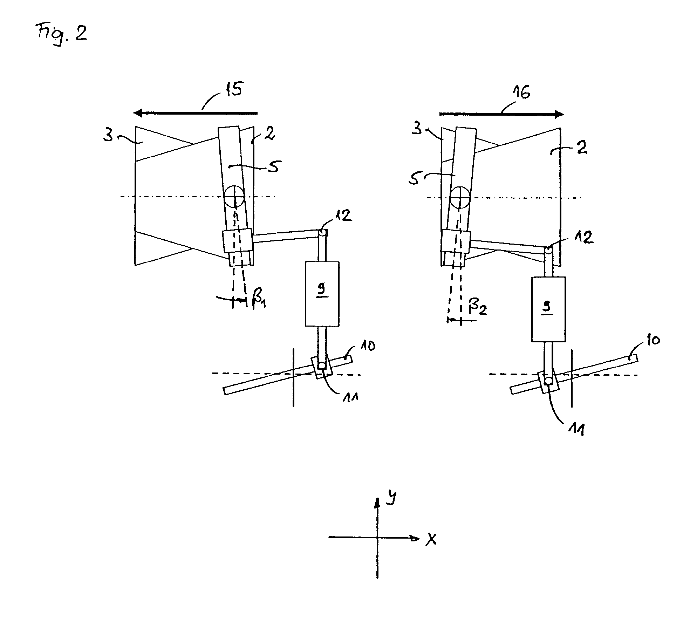

Figur 2 zeigt zwei Fälle, bei denen der Aktuator aus einem beliebigen Betriebspunkt des Kegelringgetriebes 1, bedingt beispielsweise durch einen Ausfall der Ansteuerung für den Aktuator 9, seine Neutralstellung einnimmt. Der in Figur 2, linke Seite, gezeigte Betriebspunkt entspricht dabei in etwa dem in Figur 1 dargestellten Betriebspunkt. Figur 2, rechte Seite, zeigt einen Betriebspunkt, bei dem sich der Fußpunkt 11 links von der Linie 14 bzw. von der Neutralstellung befindet.

In der linken Bildhälfte der Figur 2 befindet sich der Reibring 5 rechts von der konstruktiv festgelegten Neutralposition (vgl. Funktpunkt 11 und Linie 14). Durch die verschobene Lage des Fußpunktes 11 des Aktuators 9 wird der Reibring 5 aus seiner gewöhnlichen Laufebene um den Winkel ₁ gekippt, so dass eine Stellkraft auf den Reibring 5 wirkt, die den Ring 5 in Richtung des Pfeils 15, also nach links, verfährt. Durch die Bewegung des Reibringes 5 in Richtung des Pfeils 15 wird gleichzeitig auch der Aktuator 9 in die gleiche Richtung bewegt, wobei der Fußpunkt 11 entlang der Führungsschiene 10 gleitet und sich dem Schnittpunkt der Linie 14 und der Führungsschiene 10 nähert. Durch die damit einhergehende Fußpunktverschiebung in Y-Richtung wird der Winkel ₁ immer kleiner, bis er, wenn der Fußpunkt 11 auf der Linie 14 liegt, letztlich den Wert Null annimmt. Da nun aufgrund des Kippwinkels gleich Null keine Stellkräfte mehr auf den Reibring wirken, bleibt er in dieser axialen Position.

Wie oben bereits erwähnt, befindet sich der Reibring 5 in der rechten Bildhälfte der Figur 2 nun links von der Neutralposition des Reibringes 5, bei der der Fußpunkt 11 auf der Linie 14 liegt. Durch die Verstellvorrichtung 7 wird nun, wenn der Aktuator 9 seine Neutralstellung einnimmt (dies bedeutet einen bestimmten Abstand zwischen dem Fußpunkt 11 und dem reibringseitigen Ende 12), so wird ein Kippwinkel ₂ erzeugt, der dem Winkel ₁ aus der linken Bildhälfte der Figur 2 entgegengesetzt ist und zu einer axialen Bewegung des Reibringes 9 in Richtung des Pfeils 16, d.h. nach rechts, führt. Die Bewegung des Reibringes 5 in Richtung des Pfeils 16 endet wiederum in der Neutralposition, da sich dort wieder ein Kippwinkel gleich Null einstellt. Ein weiteres Verfahren des Reibringes 5 in Richtung des Pfeils 16 wird durch die Verstellvorrichtung 7 verhindert, die in diesem Fall dem Reibring 5 ein Kippwinkel aufzwingt, die dieser Bewegung entgegenwirken würden.

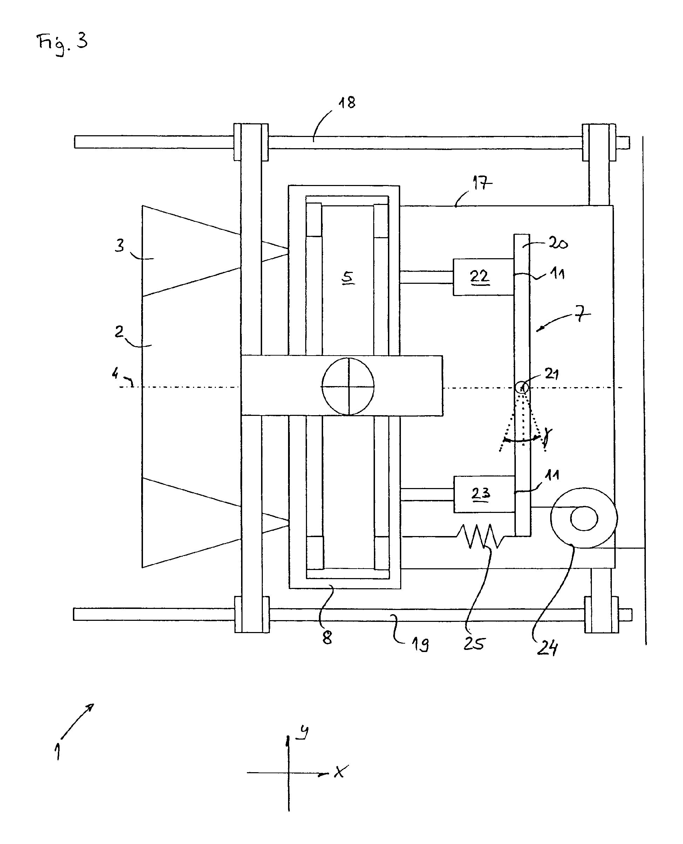

Figur 3 zeigt ein weiteres Ausführungsbeispiel der Erfindung. Bauteile, die zu den Bauteilen der Figuren 1 und 2 identisch sind bzw. vergleichbar sind, werden mit entsprechend gleichen Bezugszeichen gekennzeichnet. Im Folgenden wird nur auf die wesentlichen Unterschiede zu der Ausführung der Figuren 1 und 2 eingegangen.

Die als Rahmen ausgebildete Ringführung 8 ist auf einem Schlitten 17 angeordnet, der entlang zweier Gleitschienen 18, 19 verschoben werden kann. Die Gleitschienen 18, 19 erstrecken sich dabei parallel zu den Drehachsen der Kegelreibräder 2, 3 (siehe Linie 4). Ebenfalls auf dem Schlitten 17 angeordnet ist ein Schwenkarm 20, der sich um eine Schwenkachse 21 drehen kann. Die Schwenkachse 21 ist fest mit dem Schlitten 17 verbunden, so dass der Abstand in X-Richtung von dem Rahmen 8 und der Schwenkachse 21 konstant ist.

Zwei Aktuatoren 22, 23 stützen sich jeweils mit ihrem Fußpunkt 11 an dem Schwenkarm 20 ab, wobei sich die Fußpunkte 11 der beiden Aktuatoren an jeweils einem Ende des Schwenkarms 20 befinden.

Durch einen Seilzug 24 wird jeder axialen Position des Schlittens 17 und damit dem durch den Rahmen 8 geführten Reibring 5 genau ein Schwenkwinkel des Schwenkarms 20 zugeordnet. Dies wiederum bedeutet für die Aktuatoren 22, 23, dass sich die relative Lage deren Fußpunkte 11 sich mit der axialen Position des Reibrings 5 ändert.

Befindet sich nun der Schlitten 17 in einer anderen axialen Position, weist der Schwenkwinkel des Schwenkarms 20 einen Wert verschieden von Null auf. Soll nun über die Verstellvorrichtung 7 der Reibring in dieser Position gehalten werden, um ein bestimmtes Übersetzungsverhältnis zu realisieren, gleichen die Aktuatoren 22, 23 durch eine entsprechende Ansteuerung die Unterschiede in den Abständen zwischen dem Fußpunkt 11 des Aktuators 22 und dem Rahmen 8 einerseits und dem Fußpunkt 11 des Aktuators 23 und dem Rahmen 8 andererseits aus. Fallen nun die Aktuatoren 22, 23 oder auch nur einer von ihnen aus, fährt er bzw. sie in die Neutralstellung mit der Folge, dass mit Hilfe einer Feder 25 der Rahmen 8 und somit auch der Reibring 5 in eine Ebene gekippt wird, die parallel zu dem schräg stehenden Schwenkarm 20 ist. Durch den dann anliegenden Kippwinkel wirkt auf den Reibring 5 bedingt durch den Eingriff des Reibrings 5 mit den Kegelreibrädern 2, 3 eine Stellkraft, die den gesamten Schlitten 17 wieder in Neutralposition fahren lässt. Dabei ändert sich durch den Seilzug 24 stetig der Schwenkwinkel des Schwenkarmes 20, bis er den Wert Null annimmt. Dann befindet sich der Reibring 5 in Neutralposition, in der sowohl der Kippwinkel als auch der Schwenkwinkel gleich Null sind. Aufgrund des Kippwinkels gleich Null wirkt nun keine Stellkraft auf den Reibring, so dass der Reibring in dieser Position auch ohne aktive Ansteuerung der Aktuatoren 22, 23 verharrt.

### Bezugszeichenliste

- 1: Kegelringgetriebe
- 2: Kegelreibrad
- 3: Kegelreibrad
- 4: Achse
- 5: Reibring
- 6: Kippachse
- 7: Verstellvorrichtung
- 8: Ringführung
- 9: Aktuator
- 10: Führungsschiene
- 11: Fußpunkt
- 12: Ende (reibringseitig)
- 13: Anlenkhebel
- 14: Linie
- 15: Pfeil
- 16: Pfeil
- 17: Schlitten
- 18: Gleitschiene
- 19: Gleitschiene
- 20: Schwenkarm
- 21: Schwenkachse
- 22: Aktuator
- 23: Aktuator
- 24: Seilzug
- 25: Feder

- , ,: Winkel
- x, y: Richtung

## Patentansprüche

1. Kegelringgetriebe (1) mit zwei entgegengesetzt zueinander auf parallelen Weilen angeordneten Kegelreibrädern (2, 3) und mit einem Reibring (5), der mit beiden Kegelreibrädern (2, 3) in Eingriff steht und eines der Kegelreibräder (2, 3) umgreift, wobei der Reibring (5) durch Vorgabe eines Kippwinkels β bezogen auf eine sich senkrecht zu den Drehachsen der Kegelreibräder (2, 3) erstreckenden Laufebene axial verschiebbar ist, **dadurch gekennzeichnet, dass** eine wenigstens einen Aktuator (9; 22, 23) umfassende Verstellvorrichtung (7) bei einer Neutralstellung des Aktuators (9; 22, 23) eine axiale Neutralposition des Reibrings (5) festlegt, wobei bei axialen Positionen des Reibrings (5), die von der Neutralposition abweichen, die Verstellvorrichtung (7) bei Neutralstellung des Aktuators (9; 22, 23) Kippwinkel β vorgibt, durch die der Reibring (5) in Richtung der Neutralposition bewegt wird.

2. Kegelringgetriebe (1) nach Anspruch 1, **dadurch gekennzeichnet, dass** bei jeder Stellung des Aktuators (9; 22, 23) die Verstellvorrichtung (7) jeweils eine vorbestimmte Position des Reibringes (5) festlegt, wobei bei Positionen, die von der vorbestimmten Position abweichen, die Verstellvorrichtung (7) Kippwinkel vorgibt, durch die der Reibring (5) in Richtung der vorbestimmten Position bewegt wird.

3. Kegelringgetriebe (1) nach Anspruch 1 oder 2, **dadurch gekennzeichnet, dass** der Aktuator (9; 22, 23) einen federzentrierten Linear-Proportionalmagneten umfasst.

4. Kegelringgetriebe (1) nach einem der Ansprüche 1 bis 3, **dadurch gekennzeichnet, dass** der Aktuator einen Fußpunkt aufweist, dessen Lage sich in Abhängigkeit der axialen Position des Reibrings (5) ändert.

5. Kegelringgetriebe (1) nach Anspruch 4, **dadurch gekennzeichnet, dass** der Fußpunkt (11) des Aktuators (9; 22, 23) mit einer Fußpunktführung (10, 20) verbunden ist.

6. Kegelringgetriebe (1) nach Anspruch 5, **dadurch gekennzeichnet, dass** die Fußpunktführung als Führungsschiene (10) ausgebildet ist, die den Fußpunkt (11) des Aktuators (9) verschiebbar lagert.

7. Kegelringgetriebe (1) nach Anspruch 6, **dadurch gekennzeichnet, dass** die Führungsschiene eine Neigung zu den parallelen Achsen der Kegelreibräder (2, 3) aufweist und vorzugsweise gerade ist.

8. Kegelringgetriebe (1) nach Anspruch 6 oder 7, **dadurch gekennzeichnet, dass** die Neigung der Führungsschiene (10) einstellbar ist.

9. Kegelringgetriebe (1) nach einem der Ansprüche 1 bis 8, **dadurch gekennzeichnet, dass** ein weiterer Aktuator vorgesehen ist, der mit dem wenigstens einen Aktuator zusammenwirkt.

10. Kegelringgetriebe (1) nach Anspruch 5 oder 9, **dadurch gekennzeichnet, dass** die Fußpunktführung als Schwenkarm (20) ausgebildet ist.

11. Kegelringgetriebe (1) nach Anspruch 10, **dadurch gekennzeichnet, dass** eine Schwenkachse (21) des Schwenkarms (20) mit dem Reibring (5) in Richtung der Achsen der Kegelreibräder (2, 3) bewegbar ist.

12. Kegelringgetriebe (1) nach Anspruch 11, **dadurch gekennzeichnet, dass** eine Ringführung (8) und der Schwenkarm (20) auf einem Schlitten (17) angeordnet sind, der parallel zu den Achsen der Kegelreibräder (2, 3) bewegbar ist.

13. Kegelringgetriebe (1) nach einem der Ansprüche 10 bis 12, **dadurch gekennzeichnet, dass** eine Getriebeeinheit (24) vorgesehen ist, die eine axiale Bewegung des Reibrings (5) in eine Schwenkbewegung des Schwenkarmes (20) überführt.

14. Kegelringgetriebe (1) nach Anspruch 13, **dadurch gekennzeichnet, dass** die Getriebeeinheit als Seilzug (24) ausgebildet ist, der mit dem Schwenkarm (20) und mit einem ortsfesten Punkt verbunden ist.

15. Kegelringgetriebe nach einem der Ansprüche 1 bis 14, **dadurch gekennzeichnet, dass** eine Kippachse (6), um die der Reibring (5) kippbar ist, in der Ebene der parallelen Drehachsen de Kegelreibräder liegt, vorzugsweise in der Laufebene des Reibrings (5) liegt.

## Claims

1. Cone ring transmission (1) having two conical friction wheels (2, 3) arranged oppositely to one another on parallel shafts and having a friction ring (5) which engages with the two conical friction wheels (2, 3) and extends around one of the conical friction wheels (2, 3), with the friction ring (5) being movable axially by setting a tilt angle β in relation to a running plane extending perpendicular to the rotational axes of the conical friction wheels (2, 3), **characterized in that** an adjusting device (7) which comprises at least one actuator (9; 22, 23) defines an axial neutral position of the friction ring (5) in a neutral position of the actuator (9; 22, 23), wherein in axial positions of the friction ring (5) which differ from the neutral position, the adjusting device (7), in the neutral position of the actuator (9; 22, 23), sets a tilt angle β which causes the friction ring (5) to be moved in the direction of the neutral position.

2. Cone ring transmission (1) according to Claim 1, **characterized in that**, in every position of the actuator (9; 22, 23), the adjusting device (7) defines in each case a predetermined position of the friction ring (5), wherein in positions which differ from the predetermined position, the adjusting device (7) sets tilt angles which cause the friction ring (5) to be moved in the direction of the predetermined position.

3. Cone ring transmission (1) according to Claim 1 or 2, **characterized in that** the actuator (9; 22, 23) comprises a spring-centred linear proportional magnet.

4. Cone ring transmission (1) according to one of Claims 1 to 3, **characterized in that** the actuator has a base point, the position of which changes as a function of the axial position of the friction ring (5).

5. Cone ring transmission (1) according to Claim 4, **characterized in that** the base point (11) of the actuator (9; 22, 23) is connected to a base point guide (10, 20).

6. Cone ring transmission (1) according to Claim 5, **characterized in that** the base point guide is designed as a guide rail (10) which serves to movably mount the base point (11) of the actuator (9).

7. Cone ring transmission (1) according to Claim 6, **characterized in that** the guide rail has an inclination relative to the parallel axes of the conical friction wheels (2, 3) and is preferably straight.

8. Cone ring transmission (1) according to Claim 6 or 7, **characterized in that** the inclination of the guide rail (10) is adjustable.

9. Cone ring transmission (1) according to one of Claims 1 to 8, **characterized in that** a further actuator is provided which interacts with the at least one actuator.

10. Cone ring transmission (1) according to Claim 5 or 9, **characterized in that** the base point guide is designed as a pivot arm (20).

11. Cone ring transmission (1) according to Claim 10, **characterized in that** a pivot axis (21) of the pivot arm (20) can move with the friction ring (5) in the direction of the axes of the conical friction wheels (2, 3).

12. Cone ring transmission (1) according to Claim 11, **characterized in that** a ring guide (8) and the pivot arm (20) are arranged on a carriage (17) which is movable parallel to the axes of the conical friction wheels (2, 3).

13. Cone ring transmission (1) according to one of Claims 10 to 12, **characterized in that** a gear unit (24) is provided which converts an axial movement of the friction ring (5) into a pivoting movement of the pivot arm (20).

14. Cone ring transmission (1) according to Claim 13, **characterized in that** the gear unit is designed as a cable pull (24) which is connected to the pivot arm (20) and to a positionally fixed point.

15. Cone ring transmission according to one of Claims 1 to 14, **characterized in that** a tilt axis (6), about which the friction ring (5) can be tilted, lies in the plane of the parallel rotational axis of the conical friction wheels, preferably in the running plane of the friction ring (5).

## Revendications

1. Transmission à anneau conique (1) comprenant deux roues de friction coniques (2, 3) opposées l'une à l'autre et disposées sur des arbres parallèles, et un anneau de friction (5) qui est en prise avec les deux roues de friction coniques (2, 3) et vient en prise autour de l'une des roues de friction coniques (2, 3), l'anneau de friction (5) pouvant être déplacé axialement par rapport à un plan de roulement s'étendant perpendiculairement aux axes de rotation des roues de friction coniques (2, 3) en prédéfinissant un angle de basculement β, **caractérisée en ce qu'**un dispositif de réglage (7) comprenant au moins un actionneur (9 ; 22, 23), dans une position neutre de l'actionneur (9 ; 22, 23), fixe une position axiale neutre de l'anneau de friction (5), et dans des positions axiales de l'anneau de friction (5) qui s'écartent de la position neutre, le dispositif de réglage (7), dans la position neutre de l'actionneur (9 ; 22, 23) prédéfinit un angle de basculement β duquel l'anneau de friction (5) est déplacé dans la direction de la position neutre.

2. Transmission à anneau conique (1) selon la revendication 1, **caractérisée en ce que** pour chaque position de l'actionneur (9 ; 22, 23), le dispositif de réglage (7) fixe à chaque fois une position prédéterminée de l'anneau de friction (5), et dans les positions qui s'écartent de la position prédéterminée, le dispositif de réglage (7) prédéfinit un angle de basculement duquel l'anneau de friction (5) est déplacé dans la direction de la position prédéterminée.

3. Transmission à anneau conique (1) selon l'une quelconque des revendications 1 ou 2, **caractérisée en ce que** l'actionneur (9 ; 22, 23) comprend un aimant proportionnel linéaire centré par ressort.

4. Transmission à anneau conique (1) selon l'une quelconque des revendications 1 à 3, **caractérisée en ce que** l'actionneur présente un point de base, dont la position varie en fonction de la position axiale de l'anneau de friction (5).

5. Transmission à anneau conique (1) selon la revendication 4, **caractérisée en ce que** le point de base (11) de l'actionneur (9 ; 22, 23) est connecté à un guidage du point de base (10, 20).

6. Transmission à anneau conique (1) selon la revendication 5, **caractérisée en ce que** le guidage du point de base est réalisé sous forme de rail de guidage (10) qui supporte de manière déplaçable le point de base (11) de l'actionneur (9).

7. Transmission à anneau conique (1) selon la revendication 6, **caractérisée en ce que** le rail de guidage présente une inclinaison vers les axes parallèles des roues de friction coniques (2, 3) et est de préférence droit.

8. Transmission à anneau conique (1) selon la revendication 6 ou 7, **caractérisée en ce que** l'inclinaison du rail de guidage (10) est ajustable.

9. Transmission à anneau conique (1) selon l'une quelconque des revendications 1 à 8, **caractérisée en ce que** l'on prévoit un actionneur supplémentaire qui coopère avec l'au moins un actionneur.

10. Transmission à anneau conique (1) selon la revendication 5 ou 9, **caractérisée en ce que** le guidage du point de base est réalisé sous forme de bras pivotant (20).

11. Transmission à anneau conique (1) selon la revendication 10, **caractérisée en ce qu'**un axe de pivotement (21) du bras pivotant (20) est déplaçable avec l'anneau de friction (5) dans la direction des axes des roues de friction coniques (2, 3).

12. Transmission à anneau conique (1) selon la revendication 11, **caractérisée en ce qu'**un guide annulaire (8) et le bras pivotant (20) sont disposés sur un chariot (17), qui peut être déplacé parallèlement aux axes des roues de friction coniques (2, 3).

13. Transmission à anneau conique (1) selon l'une quelconque des revendications 10 à 12, **caractérisée en ce que** l'on prévoit une unité de transmission (24) qui convertit un mouvement axial de l'anneau de friction (5) en un mouvement de pivotement du bras pivotant (20).

14. Transmission à anneau conique (1) selon la revendication 13, **caractérisée en ce que** l'unité de transmission est réalisée sous forme de câble Bowden (24), qui est connecté au bras pivotant (20) et à un point fixe.

15. Transmission à anneau conique selon l'une quelconque des revendications 1 à 14, **caractérisée en ce qu'**un axe de basculement (6) autour duquel l'anneau de friction (5) peut basculer, se situe dans le plan des axes de rotation parallèles des roues de friction coniques, de préférence dans le plan de roulement de l'anneau de friction (5).
